# EUROPEAN PATENT APPLICATION

(11) **EP 3 315 888 A1**
(43) Date of publication of application: **02.05.2018**
(21) Application number: 16290208.4
(22) Date of filing: 31.10.2016
(51) Int. Cl.: F27B 7/20, C04B 7/47, F16K 3/02, F27D 99/00

(54) **RESTRICTOR MEMBER FOR RESTRICTING HOT, DUST-LADEN GAS FLOW IN AN AIR DUCT**

(71) Applicant: Holcim Technology Ltd., 8645 Jona (CH)
(72) Inventor: BOISSIER, Guy, 38291 Saint Quentin Fallavier (FR); MUPUTZI, Fungai, 2740 Lichtenburg (ZA); CELLIERS, Wikus, 2740 Lichtenburg (ZA); BREYTENBURG, Koert Nico, 2740 Lichtenburg (ZA)
(74) Representative: Keschmann, Marc

(57) **Abstract**

A restrictor member for restricting hot, dust-laden gas flow in an air duct, said restrictor member being in the shape of a plate made of reinforced concrete and comprising a reinforcement structure that is embedded in the concrete, wherein the reinforcement structure comprises a plurality of metal bars that are separate from each other and connected to an external metal hanging element for holding the restrictor member vertically when in use, said metal hanging element not being embedded in the concrete, and wherein the metal bars each carry a plurality of metal anchors along their length.

## Description

The invention refers to a restrictor member for restricting hot, dust-laden gas flow in an air duct, said restrictor member being in the shape of a plate made of reinforced concrete and comprising a reinforcement structure that is embedded in the concrete.

In a cement manufacturing plant, the clinker discharged from the rotary kiln is cooled in a clinker cooler. The clinker entering the cooler has a temperature of approx. 900 to 1000°C and gets quenched (rapid cooling). Due to heat transfer with the hot clinker that occurs during this process the air gets heated up to around 800 to 1000°C and carries a high amount of dust. The cooling air from the cooler is used as secondary air and due to its high temperature causes a spontaneous combustion of the coal being fed to the firing zone. A partial amount of heated air exiting the clinker cooler is usually extracted from the clinker cooler at the kiln hood and fed via a so-called tertiary air duct to some other processing stage of the cement production. The tertiary air is normally used for pre-heating of the raw meal and mostly fed to a calciner.

To balance the combustion air flow between the kiln and the calciner, a tertiary air duct damper is provided for reliable regulation of the tertiary air gases. A tertiary air damper is a plate shaped flow restrictor member that is arranged in the tertiary air duct between the clinker cooler and a calciner and is displaceable in a substantially vertical direction transversely to a direction of flow in the tertiary air duct. The tertiary air damper is also used to close the tertiary air duct when the clinker kiln line is started up.

Tertiary air dampers are subject to extremely high thermal stress due to the high temperatures and the high dust load. In particular, the clinker dust contained in the_tertiary air is highly abrasive, so that the tertiary air damper can be abraded. As a consequence, clinker-manufacturing lines have to be repeatedly shut down for maintenance purposes in order to service or exchange the tertiary air damper.

In order to increase the operating time of a restrictor member, such as a tertiary air damper, it has become known to use reinforced concrete, comprising a reinforcement structure that is embedded in concrete. Such an air damper takes advantages of the material properties of both concrete and steel. Used alone, concrete would fall, and used alone steel would bend and be corroded at high temperature. The reinforcement structure is usually made from metal, which, due to its high thermal conductivity, can drain the heat to an external structure. However, experience shows that flow restrictors of the initially defined type are still prone to cracking and have a limited lifetime. An important problem is the high thermal expansion of the steel structure leading to damper blockage. As the concrete will not expand the same way as the steel structure, the refractory lining will crack and fall, so that it cannot protect the steel structure anymore. A failure of this restrictor may have serious operating impacts on the clinker manufacture.

Therefore, the instant invention aims at improving a flow restrictor so as to prolong its lifetime under abrasive and high temperature conditions and to reduce maintenance work accordingly.

To solve these and other objects, the invention provides a restrictor member for restricting hot, dust-laden gas flow in an air duct, said restrictor member being in the shape of a plate made of reinforced concrete and comprising a reinforcement structure that is embedded in the concrete, wherein the reinforcement structure comprises a plurality of metal bars that are separate from each other and connected to an external metal hanging element for holding the restrictor member vertically when in use, said metal hanging element not being embedded in the concrete, and wherein the metal bars each carry a plurality of metal anchors along their length.

The technical effect of the metal reinforcement structure is to improve the heat transfer of the restrictor member, due to the homogeneous thermal conductivity of the concrete and the metal structure. The plurality of metal anchors increase the surface and distribution of the reinforcement structure embedded in the concrete and results in an improved drain of heat from the concrete to the external metal hanging element, which holds the restrictor member vertically when it is in use. Evacuating heat in such a manner is advantageous as it reduces the heat created in the restrictor member when it is in operation, and limits the formation of cracks in the concrete. The plurality of metal bars and the metal hanging element, to which the metal bars are connected, together preferably from a comb-like structure, which results in that the metal bars are separate from each other and thus they are not connected to each other except where they are connected to the hanging element. The comb-shaped metal reinforcement structure, compared to metal structures in a grid shape allows that thermal dilatation of the materials does not result in the creation of excess lateral mechanical stresses that would weaken the restrictor member and thereby reduce its life-time.

Preferably, the metal bars of the reinforcement structure are welded to the hanging element. The hanging element may be composed of three or four metal parts welded together in the shape of a T, similar to a beam, the vertical section being composed of two identical metal elements, in which holes are made in order to lift or lower the restrictor member when it is in operation.

According to a preferred embodiment of the invention, the anchors are V-shaped and preferably extending perpendicularly from the bars.

Preferably, the V-shaped anchors are arranged on the metal rods at regular intervals.

Preferably the V anchors are not welded directly on the rods or bars, but tack-welded on supports that are welded to the bars or tubes.

Preferably, the V-shaped anchors are arranged so that the plane spanned by the V-shape of successive anchors is arranged at an angle of 90° from each other.

A comb structure is typically achieved in that the metal bars are preferably arranged parallel to each other.

Preferably, the reinforcement structure including the anchors is made of steel.

The preferred steel used for the reinforcement structure and the hanging element is a stainless steel designed for use at higher temperatures, such as Grade 310, which combines excellent high temperature properties with good ductility and weldability. In particular, the steel is an austenitic heat-resisting stainless steel. The steel preferably is characterized by the following constituents, in weight percentages:
- < 0.25% carbon,
- 24-26% chromium,
- 19-22% nickel,
- < 2% manganese,
- < 1.5% silicon,
- < 0.45% phosphorus,
- < 0.3% sulphur,
- remainder: iron

The concrete used for the restrictor member preferably is a fluid concrete composed of cement, water, sand and aggregates. For the purpose of this invention, any type of cement, sand and aggregate may be used.

The concrete is preferentially fluid in its fresh state, in order to facilitate its casting and to ensure that the concrete entirely covers the reinforcement structure, with no air bubble trapped for example below the rods. In this connection, a preferred embodiment provides that the concrete has an initial slump of at least 160 mm measured according the slump test described in the European concrete standard EN 206.

In order to further increase the thermal conductivity of the concrete mass, helping to dissipate the heat to the metal reinforcement structure, the concrete contains between 3 and 30 wt.-% stainless steel fibres, preferably between 3 and 20 wt.-% stainless steel fibres, more preferably between 3 and 10% wt.-% stainless steel fibres.

In order to improve the thermal conductivity of the concrete and its resistance to abrasion, the concrete preferably contains > 20 wt.-%, preferably between 20 and 80 wt.-%, of silicon carbide. In this way the thermal conductivity of the concrete is brought closer to that of stainless steel of the reinforcement structure.

According to a preferred embodiment, the restrictor member is composed of at least two concrete blocks that are separated by a dry expansion joint. Preferably, the at least two concrete blocks are casted horizontally. The dry expansion joint preferably extends perpendicular to the metal bars and is preferably positioned at approximately 1/3 of from the bottom of the restrictor member.

In order to increase the thermal resistance of the restrictor member once it is in operation, after the concrete blocks are casted, the air damper after curing is heated up to at least 350°C, preferably to 500-600°C. The heating preferably is carried out in increments of 15-25°C, in particular in increments of 20°C. When the temperature reaches predetermined temperature levels, in particular temperature levels separated by 80-120°C, in particular 100°C, such as at 100°C, 200°C, 300°C, and 400°C, the temperature is maintained constant for a period of 4-6 hours, in particular 5 hours. The total heating process, from room temperature to the target level of 350-400°C, in particular 400°C, can last any duration between 24 hours and 48 hours by changing the heating rates between two periods where the temperature is maintained constant. The cooling down process is preferably performed likewise. The temperature is decreased in steps of 15-25°C, in particular in steps of 20°C, and 4-6 hour stops, in particular 5 hour stops, are each done when the temperature reaches said predetermined temperature levels, such as 300°C, 200°C, and 100°C.

In another embodiment, the air damper after curing is heated up to a maximum of 800°C following the same heating and cooling process described above.

In summary, the inventive measures, such as the comb-shaped reinforcement structure, the specific concrete mix-design, the casting of two blocks separated by a dry expansion joint, and the thermal heating of the restrictor member have the following advantages:
- Strong reduction of cracks
- Improved durability
- Resistance to abrasion
- Low cost of manufacturing
- Freedom in the selection of the concrete composition

The invention further refers to the use of a restrictor member for restricting a hot, dust-laden gas flow in a tertiary air duct arranged between a clinker cooler and a calciner of a cement manufacturing plant.

Preferably, the restrictor member is displaceable in a substantially vertical direction transversely to a direction of flow in the tertiary air duct.

The invention will now be described in more detail with reference to an exemplary embodiment illustrated in the figure.

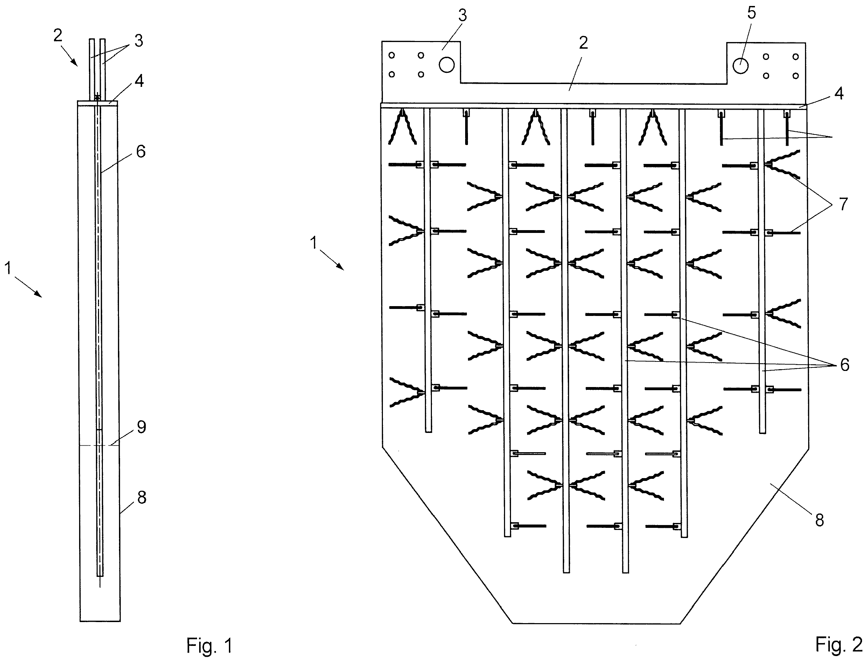

The figures show a tertiary air damper 1 for restricting a hot, dust-laden gas flow in a tertiary air duct arranged between a clinker cooler and a calciner of a cement manufacturing plant. Fig. 1 shows a front view and Fig. 2 shows a side view.

The tertiary air damper 1 comprises a hanging element 2 that is composed of three metal parts welded together in the shape of a T. The vertical section is composed of two identical metal elements 3, in which holes 5 are made in order to lift or lower the damper 1 when it is in operation. The horizontal section is composed of a steel element 4, to which the steel elements 3 are welded. A plurality of vertical, parallel steel bars 6 are welded to the steel element 4 so as to form a comb-like reinforcement structure. The bars 6 as well as the horizontal steel element 4 carry V-shaped anchors 7, that extend perpendicularly from the bars 6. The anchors 7 are composed of a stainless steel support welded on the bars 6 and a V-shape stainless steel anchor tack-welded on the support. The V-shaped anchors 7 are arranged so that the plane spanned by the V-shape of successive anchors is arranged at an angle of 90° from each other.

The concrete, in which the reinforcement structure is embedded, is denoted by reference numeral 8 and forms a plate-like member. The plate-like member comprises two concrete blocks that are separated by a dry expansion joint 9.

## Claims

1. A restrictor member for restricting hot, dust-laden gas flow in an air duct, said restrictor member being in the shape of a plate made of reinforced concrete and comprising a reinforcement structure that is embedded in the concrete, wherein the reinforcement structure comprises a plurality of metal bars that are separate from each other and connected to an external metal hanging element for holding the restrictor member vertically when in use, said metal hanging element not being embedded in the concrete, and wherein the metal bars each carry a plurality of metal anchors along their length.

2. A restrictor member according to claim 1, wherein the anchors are V-shaped and preferably extending perpendicularly from the bars.

3. A restrictor member according to claim 2, wherein the V-shaped anchors are each welded to a support element, which is pre-welded on the bar, wherein the support preferably is an omega shaped rod, or a steel plate having a hole.

4. A restrictor member according to claim 2 or 3, wherein the V-shaped anchors are arranged so that the plane spanned by the V-shape of successive anchors is arranged at an angle of 90° from each other.

5. A restrictor member according to any one of claims 1 to 4, wherein the metal bars are arranged parallel to each other.

6. A restrictor member according to any one of claims 1 to 5, wherein the reinforcement structure including the anchors is made of steel.

7. A restrictor member according to claim 6, wherein the steel is an austenitic heat-resisting stainless steel, preferably having a steel grade AISI 310, **characterized by** the following constituents, in weight percentages:
- < 0.25% carbon,
- 24-26% chromium,
- 19-22% nickel,
- < 2% manganese,
- < 1.5% silicon,
- < 0.45% phosphorus,
- < 0.3% sulphur,
- remainder: iron

8. A restrictor member according to any one of claims 1 to 7, wherein concrete is used having an initial slump of at least 160 mm measured according the slump test described in the European concrete standard EN 206.

9. A restrictor member according to any one of claims 1 to 8, wherein the concrete contains between 3 and 30 wt.-%, preferably between 3 and 20 wt.-%, more preferably between 3 and 10 wt.-% of stainless steel fibres.

10. A restrictor member according to any one of claims 1 to 9, wherein the concrete contains > 20 wt.-%, preferably 20 to 80 wt.-, of silicon carbide.

11. Use of a restrictor member according to any one of claims 1 to 10 for restricting a hot, dust-laden gas flow in a tertiary air duct arranged between a clinker cooler and a calciner of a cement manufacturing plant.

12. Use according to claim 11, wherein the restrictor member is displaceable in a substantially vertical direction transversely to a direction of flow in the tertiary air duct.
